# EUROPÄISCHE PATENTSCHRIFT

(11) **EP 3 792 165 B1**
(45) Veröffentlichungstag und Bekanntmachung des Hinweises auf die Patenterteilung: **20.09.2023**
(21) Anmeldenummer: 20193309.0
(22) Anmeldetag: 28.08.2020
(51) Int. Cl.: B62D 53/08

(54) **SATTELKUPPLUNG, VERFAHREN ZUR BESTIMMUNG VON BELADUNG-, VERSCHLEISS- UND/ODER BELASTUNGSZUSTÄNDEN IN EINER SATTELKUPPLUNG UND/ODER IN EINEM ANHÄNGER SOWIE COMPUTERPROGRAMM FÜR EIN SOLCHES VERFAHREN**
SADDLE COUPLING, METHOD OF DETECTING LOAD, WEAR AND/OR STRAIN CONDITIONS IN A SADDLE COUPLING AND/OR IN A TRAILER, AND COMPUTER PROGRAM FOR SUCH A METHOD
SELLETTE D'ATTELAGE, PROCÉDÉ DE DÉTERMINATION DES ÉTATS DE CHARGEMENT, D'USURE ET/OU DE CHARGE DANS UNE SELLETTE D'ATTELAGE ET/OU DANS UNE REMORQUE AINSI QUE PROGRAMME INFORMATIQUE POUR UN TEL PROCÉDÉ

(30) Priorität: 10.09.2019 DE 102019124281
(43) Veröffentlichungstag der Anmeldung: 17.03.2021
(73) Patentinhaber: SAF-HOLLAND GmbH, 63856 Bessenbach (DE)
(72) Erfinder: Dieter, Daniel Dominik, 64347 Griesheim (DE); Haßler, Dominik, 80335 München (DE); Köbschall, Kilian, 55129 Mainz (DE); Poss, Björn, 55452 Windesheim (DE); Scholl, Patrick, 69434 Hirschhorn (DE); Vorwerk-Handing, Gunnar, 64293 Darmstadt (DE); Köster, Mario Sebastian, 78351 Bodman-Ludwigshafen (DE)
(74) Vertreter: Müller Schupfner & Partner Patent- und Rechtsanwaltspartnerschaft mbB

(56) Entgegenhaltungen:
- BE-A3- 1 012 139
- DE-A1- 4 402 526
- DE-B4-102006 057 327
- DE-T2- 69 516 088
- JP-B2- 3 307 264
- US-B1- 6 302 424

## Beschreibung

Die vorliegende Erfindung betrifft eine Sattelkupplung, ein Verfahren zur Bestimmung von Beladung-, Verschleiß- und/oder Belastungszuständen in einer Sattelkupplung und/oder in einem Anhänger sowie ein Computerprogramm für ein solches Verfahren.

Sattelkupplungen sind aus dem Stand der Technik hinlänglich bekannt. Sie dienen in der Regel der Anbindung, insbesondere der reversiblen Anbindung, eines Anhängers, insbesondere eines Sattelanhängers, an eine Zugmaschine zur Ausbildung eines Sattelzugs. Insbesondere betrifft die vorliegende Erfindung die Bestimmung von Lastkollektiven bzw. angreifenden Kraftmomenten und Kräften, die auf die Sattelkupplung, insbesondere im gekoppelten Zustand, wirken.

Hierzu ist es aus dem Stand der Technik bekannt, Kräfte zu messen, die zwischen einem Königszapfen des Anhängers und einer Kupplungsplatte der Sattelkupplung wirken. Beispielsweise ist das Anbringen eines Kraftsensors im Königszapfen bereits beschrieben worden. Allerdings lässt sich hier nur ein Teil des Kraftflusses messen, da eine Kraftübertragung typischerweise zusätzlich über Reibkräfte zwischen dem Auflieger und der Kupplungsplatte erfolgt.

Aus der DE 10 2006 057 327 B4 ist eine Messung von Kräften zwischen einer Montageplatte bzw. Montagefläche der Zugmaschine und einer Sattelkupplung mittels Messelementen bekannt, die zwischen der Montagefläche und der Sattelkupplung angeordnet sind. Allerdings existiert eine Vielzahl verschiedener Varianten an Montageplatten bzw. Montagefläche, sodass für jede eine unterschiedliche Lösung konstruiert werden müsste. Zudem ist an dieser Stelle zwischen Sattelkupplung und Montageplatte der Einfluss des Fahrzeugrahmens vergleichsweise hoch, sodass eine entsprechende Verformung des Fahrzeugrahmens zu einer Beeinflussung der gemessenen Kräfte führen kann.

Die US 6 302 424 B1 beschreibt eine Kraftmessung an den Lagern der Kupplungsplatte. Allerdings bleibt hier unberücksichtigt, dass sich der Kraftfluss zwischen einem Lagereinsatz und einem Dämpfungselement aufteilt. Entsprechend müsste ein Verhältnis der Aufteilung in diese beide Kraftpfade mitbestimmt werden, was allerdings aufgrund von Alterung und Verschleiß des Lagereinesatzes bzw. des Dämpfungselements nicht möglich ist.

Die DE 44 02 526 A1 betrifft die Lagerung einer Kupplungsplatte einer Sattelkupplung, welche auf Lagerböcken gelagert ist und mit Messmitteln versehen ist, welche zum Beispiel als Dehnmess-Streifen ausgebildet sind. Diese Messmittel dienen zur Messung von Beschleunigungs-, Zug- oder Bremskräften, welche in der Sattelkupplung an der Sattelzugmaschine entstehen. Außerdem kann dadurch eine Gewichtsmessung des Sattelanhängers erfolgen. Dieses Dokument beschreibt eine Sattelkupplung gemäß dem Oberbegriff des Anspruchs 1.

Die US 6,302,424 B1 betrifft ein System mit einer Vielzahl von Sensoren, welche in einer Lagerstruktur einer Sattelkupplung angeordnet sind.

Ausgehend hiervon machte es sich die vorliegende Erfindung zur Aufgabe, eine Sattelkupplung bereitzustellen, mit der auf möglichst unverfälschte Weise auf einen Kraftfluss durch die Sattelkupplung Rückschluss genommen werden kann.

Die Aufgabe wird gelöst mit einer Sattelkupplung gemäß Anspruch 1 sowie mit einem Verfahren gemäß Anspruch 8 und mit einem Computerprogramm gemäß Anspruch 9. Weitere Vorteile und Merkmale der Erfindung ergeben sich aus den Unteransprüchen sowie der Beschreibung und den beigefügten Figuren.

Gemäß einem ersten Aspekt der vorliegenden Erfindung ist eine Sattelkupplung zum reversiblen Kuppeln eines Anhängers, insbesondere eines Sattelanhängers, an eine Zugmaschine vorgesehen, umfassend:
- eine Kupplungsplatte zur Aufnahme eines Zapfenelements des Anhängers,
- einen Lagerbock zur schwenkbaren Lagerung der Kupplungsplatte um eine Schwenkachse, insbesondere um eine im Wesentliche horizontal und vorzugsweise quer zu Längsrichtung der Zugmaschine verlaufende Schwenkachse, und
- einen Lagereinsatz, der im montierten Zustand zwischen dem Lagerbock und der Kupplungsplatte angeordnet ist,
wobei zwischen dem Lagereinsatz und der Kupplungsplatte ein Zwischenelement vorgesehen ist, das mindestens einen Sensor zur Krafterfassung umfasst. Gegenüber dem Stand der Technik ist erfindungsgemäß ein Zwischenelement vorgesehen, das mindestens einen Sensor zur Krafterfassung umfasst und zwischen dem Lagereinsatzes und der Kupplungsplatte angeordnet ist, um so sicherzustellen, dass der Kraftfluss, der auf die Kupplungsplatte einwirkt, ausschließlich über das Zwischenelement auf den Lagerbock übertragen wird. Insbesondere ist es mittels des Zwischenelements möglich, den Kraftfluss, insbesondere eine Größe und/oder eine Richtung des Kraftflusses, in einem Bauteil, nämlich dem Zwischenelement, zu bestimmen, das gegenüber anderen Bauteilen der Sattelkupplung, wie zum Beispiel einem Dämpfungselement und/oder einem Lagereinsatz, keinem wesentlichen Verschleiß oder keiner wesentlichen Alterung unterliegt. Durch die Konzentration der Bestimmung des Kraftflusses auf das Zwischenelement ist es sodann möglich, den Kraftfluss unabhängig von etwaigen Verschleißerscheinung an der Sattelkupplung zu bestimmen, sodass langfristig gewährleistet werden kann, dass die bestimmten bzw. gemessenen Kraftflüsse jeweils denselben Kraftverhältnissen in der Sattelkupplung zugeordnet werden können. Vorzugsweise umfasst der Lagerbock mindestens einen Anschlussbereich, vorzugsweise zwei in Längsrichtung zueinander beanstandete Anschlussbereiche, über die der Lagerbock an einer Montagefläche bzw. Montageplatte, die insbesondere an einem hinteren Abschnitt einer Zugmaschine ausgebildet ist, angebunden ist. Zwischen den beiden Anschlussbereichen ist vorzugsweise ein Lagerbockauge vorgesehen, das gegenüber der Montagefläche in vertikaler Richtung beabstandet ist und insbesondere zur Festlegung der Schwenkachse dient, um die die Kupplungsplatte schwenkbar gelagert ist. Insbesondere versteht man unter einem Lagerbockauge eine Öffnung im Lagerbock, die ein Durchgreifen entlang einer Schwenkachse bzw. Querrichtung der Sattelkupplung bzw. der Zugmaschine gestattet. Das Auge muss nicht zwangsläufig in Querrichtung verlaufen, auch wenn dies vorteilhaft ist. Beispielsweise ist es vorstellbar, dass es in Längsrichtung verläuft. Dadurch ist es in vorteilhafter Weise möglich, die Kupplungsplatte an einer Außenseite des Lagerbocks, in vorteilhafter Weise möglich, die Kupplungsplatte an einer Außenseite des Lagerbocks, insbesondere des Lagerbockauges, schwenkbar gleitend zu lagern. Dabei wird der Lagereinsatz gleitend entlang einer Außenseite des Lagerbocks, insbesondere einer gewölbten bzw. kuppelartigen Auswölbung im Bereich des Lagerbockauges, bei einer Schwenkbewegung der Kupplungsplatte mitbewegt. Weiterhin ist es erfindungsgemäß vorgesehen, dass das Zwischenelement aus Metall, vorzugsweise Stahl gefertigt ist. Dadurch ist in vorteilhafter Weise möglich, sicherzustellen, dass kein oder ein vernachlässigbar kleiner Verschleiß am Zwischenelement erfolgt.

Gemäß einer nicht beanspruchten Ausführungsform kann sich das Material, aus dem das Zwischenelement gefertigt ist, von demjenigen unterscheidet, aus dem der Lagereinsatz gefertigt ist.

Vorzugsweise ist es vorgesehen, dass das Material, aus dem das Zwischenelement gefertigt ist, derart gewählt ist, dass es eine ausreichende elastische Verformung zulässt, wenn eine entsprechende Krafteinwirkung auf das Zwischenelement wirkt. Durch die entsprechend geeignete Auswahl des Materials für das Zwischenelement lässt sich dann in vorteilhafter Weise anhand der jeweils festgestellten Deformationen, insbesondere elastischen Deformationen, feststellen, wie groß und/oder in welcher Richtung der Kraftfluss erfolgt. Weiterhin ist es bevorzugt vorgesehen, dass die Kupplungsplatte dazu ausgelegt ist, einen Königszapfen aufzunehmen, der bevorzugt bei einem Kuppelprozess über einen trichterförmigen bzw. ein schlitzförmigen Einführbereich in die Sattelkupplung einführbar ist und in einem in Längsrichtung auf Höhe des Lagerbockauges angeordneten Bereich fixierbar ist. In der fixierten Stellung ist der Königszapfen dabei drehbar um eine im Wesentlichen vertikal verlaufende Drehachse gelagert.

Gemäß einer bevorzugten Ausführungsform der vorliegenden Erfindung ist das Zwischenelement einstückig bzw. monolithisch ausgebildet. Dadurch kann verhindert werden, das Fügestellen am Zwischenelement gegebenenfalls die Kraftflussbestimmung auf Dauer verfälschen, da sich die Fügestellen aufgrund der dauerhaften Belastung geschwächt werden bzw. ihren Zustand ändern können. Unter "einstückig" ist insbesondere zu verstehen, dass das Zwischenelement nicht zerstörungsfrei in weitere Einzelteile zerlegbar ist. Vorzugsweise ist das Zwischenelement in einem Stück gegossen und/oder geschmiedet.

Vorzugsweise umschließt der Lagereinsatz den Lagerbock teilschalenförmig. Insbesondere weist der Lagereinsatz eine dem Lagerbock zugewandte Innenseite auf, die dem Verlauf der Außenwölbung des Lagerbocks entspricht. Auf diese Weise bildet der Lagereinsatz eine Art Teilring, der an der Außenseite des Lagerbocks im Sinne eines Außenrings eines Lagers gleitend gelagert werden kann. Vorzugsweise ist der Lagereinsatzes aus einem Kunststoff gefertigt und/oder mit einer Kunststoffbeschichtung versehen, die ein möglichst reibungsfreies Gleiten des Lagereinsatzes an der Außenseite des Lagerbocks gestattet. Dabei erstreckt sich der Lagereinsatz vorzugsweise streifenförmig entlang der Längsrichtung des Lagerbocks bzw. der Zugmaschine.

Vorzugsweise ist das Zwischenelement über den Lagereinsatz gleitend an einer Außenseite des Lagerbocks gelagert und vorzugsweise mittels eines Spannelements an den Lagerbock angebunden. Insbesondere ist der Lagereinsatz mittels des Spannelements an die Außenseite des Lagerbocks angeklemmt bzw. anliegend angebunden. Durch das Anbinden an das Zwischenelement kehrt man von der üblichen Anbindung der Kupplungsplatte an das Spannelement ab und stellt sicher, dass das Spannelement nicht unmittelbar mit der Kupplungsplatte, sondern an das Zwischenelement angebunden ist. Dabei greift das Spannelement, beispielsweise in Form eines Riegels, durch das Lagerbockauge in Querrichtung des Lagerbocks durch. Insbesondere ist das Spannelement, beispielsweise in Form des Riegels, derart dimensioniert, dass der durch das Lagerbockauge durchgreifende Riegel bzw. das durchgreifende Spannelement in Querrichtung gesehen an beiden Seiten des Lagerbockauges vorsteht. Dadurch ist eine einfache Anbindung an das Spannelement möglich. Vorzugsweise ist an einer Innenseite des Lagerbockauges ein Dämpfungselement zwischen dem Lagerbockauge, insbesondere der Innenseite des Lagerbockauges, und dem Spannelement angeordnet. Ein solches Dämpfungselement ist vorzugsweise aus einem gummielastischen Material gefertigt und gestattet die gedämpfte Lagerung der Kupplungsplatte hinsichtlich einer Auf- und Ab-Bewegung d. h. einer Bewegung entlang einer im Wesentlichen vertikalen Richtung.

Erfindungsgemäß ist der Sensor ein Kraftaufnehmer bzw. Kraftsensor in Form eines Dehnungsmessstreifen und/oder eines Piezoelements. Beispielsweise handelt es sich bei dem Zwischenelement oder der Sensoranordnung um einen Körper, vorzugsweise um einen Quader, an dessen Außenflächen bzw. Außenseiten mindestens teilweise bzw. bereichsweise ein Sensor in Form eines Dehnungsmessstreifens angeordnet ist. Vorzugsweise sind an zueinander schräg, insbesondere senkrecht, zueinander verlaufenden Außenflächen bzw. Außenseiten des Körper jeweils mindestens ein Sensor angeordnet, sodass durch die Messung mittels der verschiedenen Sensoren an den unterschiedlichen Außenflächen bzw. Außenseiten Informationen über die Richtung des Kraftflusses gewonnen werden können. Dabei basiert die Messung des Dehnungsmessstreifens auf Grundlage der elastischen Verformung des Körpers infolge der Krafteinwirkung, die der Körper bei Belastung des Zwischenelements, erfährt. Weiterhin ist es vorstellbar, dass der Körper mit dem mindestens einen Dehnungsmessstreifen, vorzugsweise mit mehreren Dehnungsmessstreifen, an einer der Kupplungsplatte zugewandten Seite bzw. Außenseite des Zwischenelements angeordnet ist. Insbesondere ist der Körper in einem entsprechenden Rücksprung an der Außenseite des Zwischenelements eingelassen. Beispielsweise ist es auch vorstellbar, dass der Körper mit dem mindestens einen Dehnungsmessstreifen in das Zwischenelement integriert ist. Weiterhin ist es bevorzugt vorgesehen, dass, beispielsweise entlang der Außenseite des Zwischenelements, die der Kupplungsplatte zugewandt ist, mehrere Körper mit Dehnungsmessstreifen vorgesehen sind, wodurch eine räumliche Verteilung der Größe des Kraftflusses im Übergangsbereich zwischen Zwischenelement und Kupplungsplatte festgestellt werden kann. Dadurch lässt sich ein noch detailliertes Bild der Belastung der Sattelkupplung feststellen, anhand der wiederum Rückschluss - beispielsweise auf eine bestimmte Fahrsituation des Sattelzuges - gezogen werden kann.

Vorzugsweise ist es vorgesehen dass die Sattelkupplung dazu ausgelegt ist, die durch den Sensor zur Krafterfassung erfasste Informationen, d. h. die Größe des Kraftflusses bzw. die Richtung des Kraftflusses, an eine Steuereinheit weiterzugeben. An dieser Steuereinheit ist es vorzugsweise möglich, die erfasste Belastung beispielsweise einer bestimmten Fahrsituation zuzuordnen, um sie - beispielsweise mittels einer entsprechend gesteuerten Rekuparationstrategie - dazu zu nutzen, den Energiebedarf des Sattelzuges zu optimieren. Es ist weiterhin vorstellbar, dass die Information genutzt wird, um im Sinne eines autonomen Fahrens Informationen zum Steuern des gesamten Sattelzuges bereitzustellen. Im einfachsten Fall ist die Steuereinheit mindestens dazu ausgelegt, darüber zu informieren, dass die Belastung in der Sattelkupplung einen kritischen Wert überschreitet und/oder ob eine Fehlfunktion der Sattelkupplung vorliegt.

Zweckmäßigerweise umfasst das Zwischenelement einen ersten Schenkelbereich, einen zweite Schenkelbereich und einen zwischen dem ersten Schenkelbereich und dem zweiten Schenkelbereich angeordneten Zentralbereich, wobei der Zentralbereich zur Anbindung an den Lagerbock und der erste Schenkelbereich und/oder der zweite Schenkelbereich zu Anbindung an die Kupplungsplatte vorgesehen ist. Vorzugsweise erstrecken sich der erste Schenkelbereich und/oder der zweite Schenkelbereich abstehend vom Zentralbereich in Längsrichtung des Lagerbocks bzw. der Zugmaschine jeweils nach vorne und nach hinten, sodass sie in entsprechender Weise eine Kippbewegung der Kupplungsplatte optimal aufnehmen können. Dabei kann die Form des Zwischenelementes grundsätzlich beliebig ausgestaltet sein. Durch eine entsprechende Gestaltung, insbesondere gebogene Gestaltung, des ersten Schenkelbereichs und/oder des zweiten Schenkelbereich ist es dennoch möglich, eine möglichst kompakte Sattelkupplung bereitzustellen, die keinen zusätzlichen Platzbedarf durch das Einfügen des Zwischenelements erfordert. Es ist allerdings auch vorstellbar, dass das Zwischenelement über einen ersten und/oder zweiten Schenkelbereich verfügt, die jeweils in Längsrichtung über eine Länge vom Zentralbereich abstehen, die kleiner ist als die Länge des Zentralbereichs in Längsrichtung.

In einer bevorzugten Ausführungsform verlaufen der erste Schenkelbereich und/oder der zweite Schenkelbereich winklig zum Zentralbereich. Die Verlaufsrichtung der Bereiche ist dabei die Haupterstreckungsrichtung der Bereiche. Unter einem winkligen Verlauf ist dabei zu verstehen, dass zumindest ein Winkel von 10° bevorzugt von mindestens 30° und besonders bevorzugt von mindestens 60° zwischen den Verlaufsrichtungen eingeschlossen ist. Durch die winklige Anordnung der Bereiche zueinander kann eine besonders kompakte Ausgestaltung des Zwischenelements erreicht werden.

Zweckmäßigerweise ist die Kupplungsplatte ausschließlich mittelbar über das Zwischenelement an dem Lagereinsatz festgelegt oder angebunden. Dadurch wird in vorteilhafter Weise vermieden, dass eine Kraftübertragung von der Kupplungsplatte auf den Lagerbock auf anderem Wege erfolgt als über das Zwischenelement. Dadurch kann sichergestellt werden, dass jeglicher Kraftfluss durch das Zwischenelement fließen muss und entsprechend von dem mindestens einen Sensor zur Krafterfassung registriert wird.

Ein nicht beanspruchtes Beispiel ist eine Sattelkupplung zum reversiblen Kuppeln eines Anhängers, insbesondere eines Sattelanhängers, an eine Zugmaschine, umfassend:
- eine Kupplungsplatte zur Aufnahme eines Zapfenelements des Anhängers,
- einen Lagerbock zur schwenkbaren Lagerung der Kupplungsplatte um eine Schwenkachse und
- einen Lagereinsatz, der im montierten Zustand zwischen dem Lagerbock und der Kupplungsplatte angeordnet ist,
wobei der Lagereinsatz mindestens einen Sensor oder mindestens ein Sensorsystem aus mehreren Einzelsensoren bzw. weiteren Sensoren zur Erfassung von Kraftgröße und Kraftrichtung umfasst. Alle für die weiter oben beschriebene Sattelkupplung erwähnten Eigenschaften und Vorteile lassen sich analog auf diese Sattelkupplung übertragen und andersrum. Insbesondere ist es hier vorgesehen, dass mittels des Sensors oder des Sensorsystems die Kraftgröße und Kraftrichtung erfasst wird, woraufhin unter Verwendung eines analytischen Programms, insbesondere Computerprogramms, beispielsweise ein unverfälschter Kraftflusses bestimmt und zur Weiterverarbeitung bereitgestellt wird. Hierzu werden entsprechende Einflüsse, die beispielsweise durch den Verschleiß des Lagereinsatzes und/oder des Dämpfungselementes hervorgerufen werden, entsprechend berücksichtigt, insbesondere korrigierend bei der Bestimmung der Kraftgröße und Kraftrichtung berücksichtigt.

Hierzu ist es beispielsweise vorstellbar, dass zurückgegriffen wird auf Erfahrungswerte, die für das jeweilige System der Sattelkupplung, insbesondere für die jeweilig verwendeten Lagereinsätze und/oder Dämpfungselemente bekannt sind. Es ist auch vorstellbar, dass durch regelmäßige, gezielte Messungen ein Verschleißzustand des Lagereinsatzes und/oder des Dämpfungselementes erfasst wird, woraufhin dieser beispielsweise in einer Rechnereinheit bei der Bestimmung des Kraftflusses, insbesondere der Kraftgröße und Kraftrichtung, mitberücksichtigt wird. Vorzugsweise ist dabei das Sensorsystem dazu ausgelegt, die Kraftrichtung festzustellen. D. h. das Sensorsystem ist dazu ausgelegt, feststellen zu können, entlang welcher Richtung der Kraftfluss durch das Sensorsystem erfolgt. Alternativ ist es besonders bevorzugt vorgesehen, dass neben dem Sensor ein weiterer Sensor vorgesehen ist, der zusammen mit dem Sensor die Information zu Kraftgröße und Kraftrichtung erfasst und bereitstellt.

In Rahmen des oben genannten Beispiels ist der mindestens eine Sensor oder mindestens ein Einzelsensor des Sensorsystems in einem Kontaktbereich zwischen der Kupplungsplatte, insbesondere zwischen einer Lagertasche der Kupplungsplatte, und dem Lagereinsatz angeordnet. Dadurch ist es in vorteilhafter Weise möglich, auf ein zusätzliches Zwischenelement zwischen der Kupplungsplatte und dem Lagereinsatzes zu verzichten, wodurch ein möglichst platzsparendes bzw. bauraumökonomisches System für die Sattelkupplung bereitgestellt wird. Beispielsweise ist der mindestens eine Sensor an einer Außenseite des Lagereinsatzes angeordnet. Dabei bedeckt der mindestens eine Sensor diese Außenseite mindestens bereichsweise, vorzugsweise vollständig.

Ferner ist es besonders bevorzugt vorgesehen, dass der mindestens eine Einzelsensor oder der weitere Sensor an einer im Wesentlichen vertikal verlaufenden Kontaktfläche zwischen Lagereinsatzes und Lagertasche angeordnet ist. Dadurch ist es in vorteilhafter Weise möglich, dass durch die seitliche Anordnung der weiteren Sensoren bzw. der anderen Einzelsensoren des Sensorsystems weitere Kraftflussrichtungen erfasst werden, insbesondere ergänzend zu derjenigen Kraftflussrichtung, die zugänglich ist durch den Sensor, der an der Oberseite bzw. Außenseite des Lagereinsatzes angeordnet ist, die der Kupplungsplatte zugewandt ist. Neben dem Sensor, der in vertikaler Richtung zwischen der Kupplungsplatte und dem Lagereinsatzes angeordnet ist, kann das Sensorsystem um die seitlich am Lagereinsatz ausgeformten Sensoren ergänzt werden, die in horizontaler Richtung zwischen Lagereinsatz und Lagertasche der Kupplungsplatte angeordnet sind.

Ein weiterer Aspekt der vorliegenden Erfindung ist ein Verfahren zur Bestimmung von Beladung-, Verschleiß- und/oder Belastungszuständen in einer Sattelkupplung und/oder in einem Anhänger, der in einem gekoppelten Zustand an die Sattelkupplung angebunden ist, mittels einer erfindungsgemäßen Sattelkupplung. Alle für die Sattelkupplungen beschriebenen Vorteile und Eigenschaften lassen sich analog übertragen auf das Verfahren zur Bestimmung von Beladung-, Verschleiß- und/oder Belastungszuständen in einer Sattelkupplung. Erfindungsgemäß ist es vorgesehen, dass der Belastung-, Verschleiß- und/oder Belastungszustand anhand der bestimmten Größe des Kraftflusses bestimmt wird. Dabei umfasst der Begriff Kraftflussgröße bzw. die Größe des Kraftflusses sowohl die betragsmäßige Größe als auch die Richtung des Kraftflusses durch den Sensor, mit dem der Kraftfluss erfasst wird.

Ein weiterer Aspekt der vorliegenden Erfindung ist ein Computerprogramm gemäß dem Anspruch 9. Die Erfindung kann daher auch ein computerimplementiertes Verfahren zur Bestimmung von Beladung-, Verschleiß- und/oder Belastungszuständen in einer erfindungsgemäßen Sattelkupplung und/oder in einem Anhänger, der in einem gekoppelten Zustand an die Sattelkupplung angebunden ist, betreffen. Alle für die Sattelkupplungen und das Verfahren beschriebenen Eigenschaften und Vorteile lassen sich analog übertragen auf das Computerprogramm und andersrum. Vorzugsweise wird das Computerprogramm ausgeführt auf einer Rechnereinheit, die mindestens ein Mikroprozessor aufweist. Es ist alternativ vorstellbar, dass das Computerprogramm auf einem Server ausgeführt wird bzw. in einem Netzwerk. Besonders bevorzugt nutzt das Computerprogramm ein neuronales Netzwerk bzw. Datenbanken, auf die das Computerprogramm Zugriff erhält, um anhand von Erfahrungswerten bzw. trainierten Datensätzen, Informationen zu erhalten über den möglichen Verschleiß des Dämpfungselements und/oder des Lagereinsatzes, die in der jeweiligen Sattelkupplung verwendet werden. Dadurch lässt sich ein möglichst detailliertes Bild über den jeweiligen Beladung-, Verschleiß-, und/oder Belastungszustand in der Sattelkupplung und/oder in dem Anhänger, der in einem gekoppelten Zustand an die Sattelkupplung angebunden ist, ermitteln. Vorzugsweise stellt die Rechnereinheit die gewonnenen Informationen über den Beladung-, Belastung-, und/oder Verschleißzustand der Sattelkupplung einer Steuereinheit zur Verfügung, die beispielsweise Teil eines Bordcomputers des Sattelzugs ist. Anhand der gewonnenen Erkenntnisse über den Beladung-, Belastung- und/oder Verschleißzustand der Sattelkupplung lässt sich wiederum Aufschluss gewinnen über die aktuelle Fahrsituation. Beispielsweise wird auf Grundlage der ermittelten Informationen über den Beladung-, Belastung-, und/oder Verschleißzustand ein Sattelzug dahingehend gesteuert, dass er möglichst energiesparend betrieben wird, insbesondere indem zum richtigen Zeitpunkt eine Rekuparation veranlasst wird, mit der Energie zurückgewonnen werden kann. Alternativ ist es vorstellbar, dass die Steuereinrichtung die gewonnenen Informationen über den aktuellen Fahrzeugzustand zum autonomen Fahren des Sattelzugs nutzt.

Weitere Vorteile und Eigenschaften ergeben sich aus der nachfolgenden Beschreibung bevorzugter Ausführungsformen des erfindungsgemäßen Gegenstands mit Bezug auf die beigefügten Figuren. Es zeigt:
- **Fig. 1**: zeigt schematisch eine Sattelkupplung gemäß einer ersten beispielhaften Ausführungsform der vorliegenden Erfindung in einer Draufsicht
- **Fig. 2**: zeigt schematisch die Sattelkupplung aus Figur 1 in einer Schnittansicht in einer Schnittansicht entlang der A-A-Linie
- **Fig. 3**: zeigt schematisch eine Sattelkupplung gemäß einer zweiten beispielhaften Ausführungsform der vorliegenden Erfindung in einer Schnittansicht
- **Fig. 4**: zeigt schematisch eine Sattelkupplung gemäß einer dritten beispielhaften Ausführungsform der vorliegenden Erfindung in einer Schnittansicht und
- **Fig. 5**: zeigt schematisch eine Sattelkupplung gemäß einer vierten beispielhaften Ausführungsform der vorliegenden Erfindung in einer Schnittansicht.

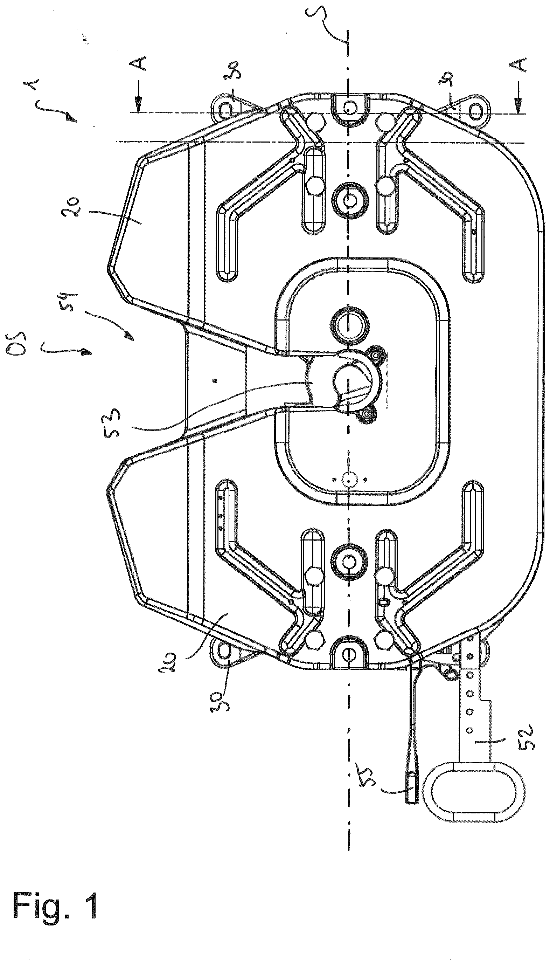

In **Figur 1** ist schematisch eine Sattelkupplung 1 gemäß einer ersten beispielhaften Ausführungsform der vorliegenden Erfindung dargestellt. Insbesondere dient eine derartige Sattelkupplung 1 dem reversiblen, d. h. lösbaren Kuppeln, eines Anhängers (nicht dargestellt), insbesondere eines Sattelanhängers, an eine Zugmaschine (nicht dargestellt) zur Ausbildung eines Sattelzugs. In der in Figur 1 dargestellten Ansicht ist einer Draufsicht (von oben) auf die Sattelkupplung 1 illustriert. Dabei umfasst die Sattelkupplung 1 eine Kupplungsplatte 20 zur Aufnahme eines Zapfenelements bzw. eines Königszapfens des Anhängers. Die Sattelkupplung 1 ist vorzugsweise in einem hinteren Abschnitt einer Zugmaschine an einer entsprechenden Montageplatte bzw. Montagefläche 25 angebunden und gestattet die Anbindung eines Anhängers bzw. Sattelanhängers über dessen Zapfenelement bzw. Königszapfen. Zum Anbinden wird der Königszapfen über einen Einführbereich 54 an einer offenen Seite OS der Kupplungsplatte 20 eingeführt. Der trichterförmige Einführbereich 54 führt den Königszapfen in seine finale Stellung, in der er mit einem Schlossstück 53 fixierbar ist. Ein derartiges Schlossstück 53 ist vorzugsweise vorgespannt mittels einer Feder, sodass der Königszapfen in seiner finalen Stellung den durch das Schlossstück 53 begrenzten Abschnitt am Ende des Einführbereichs 54 nicht mehr verlassen kann. Mittels eines Entriegelungsgriffs 52 lässt sich dabei das Schlossstück 53 derart verschwenken bzw. rotieren, dass der Weg für den Königszapfens zum offenen Ende des Eingangsbereich 54 freigegeben werden kann und der Königszapfens die fixierte Stellung schließlich bei Bedarf wieder verlassen kann. Ferner ist eine Verschlusssicherung 55 vorgesehen, mit der sichergestellt werden kann, dass der Entriegelungsgriff 52 nicht versehentlich geöffnet wird bzw. betätigt wird. In seiner fixierten Stellung ist der Königszapfen dabei um eine im Wesentlichen vertikal verlaufende Richtung drehbar gelagert, sodass Anhänger und Zugmaschine bei einer Kurvenfahrt zueinander gewinkelt ausgerichtet werden können.

Um bei einer Bergauf- bzw. Bergabfahrt eine abgewinkelte Ausrichtung, d. h. eine Nickbewegung, zwischen Zugmaschine und Anhänger bezüglich eines Fahrbahnverlaufs zu gestatten, ist es vorgesehen, dass die Kupplungsplatte 20 schwenkbar um eine Schwenkachse S, insbesondere eine im Wesentlichen horizontal und entlang der Querrichtung verlaufende Schwenkachse S, gelagert ist. Zur schwenkbaren Lagerung der Kupplungsplatte 20 ist die Kupplungsplatte 20 mittelbar an mindestens einen Lagerbock 30, vorzugsweise an zwei in Querrichtung der Zugmaschine einander gegenüberliegenden Lagerböcken 30, angebunden.

Insbesondere ist es vorgesehen, dass die Kupplungsplatte 20 über einen Lagereinsatz 21 an den Lagerbock 30 gleitend angebunden ist. Dabei liegt der Lagereinsatz 21 mit einer Seite an der Außenschale bzw. Außenseite der Lagerbocks 30 an und mit einer gegenüberliegenden Seite greift der Lagereinsatz 21 in eine kupplungsplattenseitig ausgebildete Lagertasche 22 ein. Folgt der Sattelzug einer Nickbewegung wird somit der Lagereinsatz 21 entlang der Außenseite des Lagerbocks 30, insbesondere im Bereich des gewölbten Abschnitts des Lagerbocks 30, der im Bereich eines Lagerbocksauges 35 des Lagerbocks 30 ausgebildet ist, gleitend bewegt.

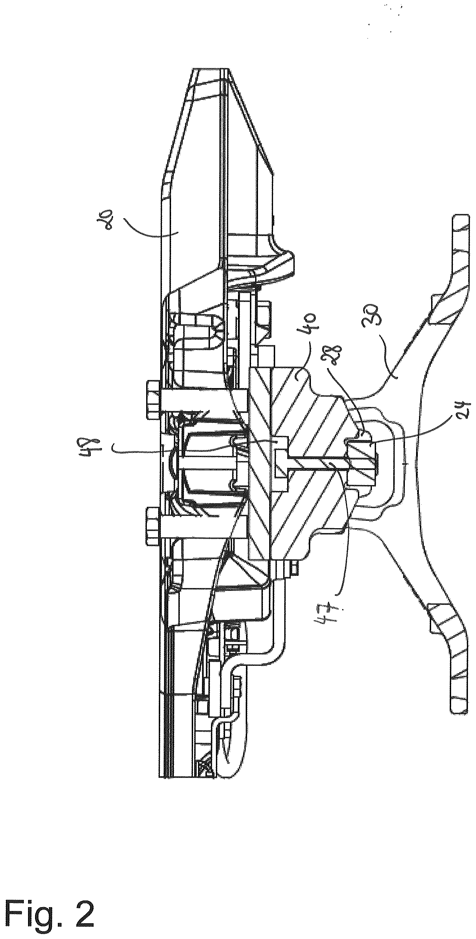

Um eine unverfälschte Kraftflussmessung in der Sattelkupplung 1 zu ermöglichen, sieht die Sattelkupplung 1 in der Ausführungsform der Figur 2 ein Zwischenelement 40 vor, über das die Kupplungsplatte 20 an den Lagereinsatz 21 angebunden ist. Dabei umfasst das Zwischenelement 40 einen Sensor 50 zur Krafterfassung, der insbesondere zur Messung einer Kraftgröße und/oder einer Kraftrichtung ausgelegt ist. Durch die Nutzung eines Zwischenelement 40 ist es in vorteilhafter Weise möglich, die Kraftmessung auf das Zwischenelement 40 zu beschränken, durch das der Kraftfluss zwangsweise erfolgen muss, ohne dass er beeinträchtigt werden könnte von eventuellen Verschleißzuständen des Lagereinsatzes 21 und/oder eines Dämpfungselements 28. Insbesondere ist es vorgesehen, dass durch die Nutzung eines Zwischenelements 40 eine Entkopplung von Kupplungsplatte 20 und Lagereinsatz 21, der einem Verschleiß unterliegt, möglich wird.

Weiterhin ist es vorgesehen, dass der Lagerbock 30 Anschlussbereiche 45 vorsieht, über die der Lagerbock 30 an eine Montagefläche 25 anbindbar ist bzw. angebunden ist. Dabei ist es z. B. vorgesehen, dass der Lagerbock 30 bügelförmig ausgebildet ist, wobei das zwischen den beiden Anschlussbereichen 45 in Längsrichtung des Lagerbocks 30 gesehen zwischen den Anschlussbereichen 45 ausgebildete Lagerbockauge 35 gegenüber der Montagefläche 25 beanstandet angeordnet ist. Die Ausführungsformen der Figuren 2 bis 5 zeigen Schnittansichten durch Sattelkupplungen entlang der A-A-Linie, die in Figur 1 integriert ist, bzw. entlang einer dazu parallelen Schnittebene.

Insbesondere ist es in dem in **Figur 2** dargestellten Ausführungsbeispiel vorgesehen, dass ein Befestigungsmittel 47 das Zwischenelement 40 mit einem Spannelement 24 verbindet, das durch das Lagerbockauge 35 quer hindurchgreift. Insbesondere stehen Zwischenelement 40 und Stegelement 24 in Querrichtung gesehen hierzu gegenüber dem Lagerbock 30 vor, sodass mittels zweier Befestigungsmittel 47 die in Querrichtung seitlich an den Lagerbock 30 angrenzend bzw. benachbart angeordnet sind, eine Verbindung zwischen dem Spannelement 24 und dem Zwischenelement 40 realisiert wird, wobei die Verbindung dafür sorgt, dass das Zwischenelement 40 an die Außenseite bzw. Außenschale des Lagerbocks 30, die gewölbt ist, angespannt bzw. angeklemmt ist bzw. angeordnet ist. Mit anderen Worten ist es vorgesehen, dass auf eine unmittelbare Anbindung des Spannelements 24 an die Kupplungsplatte 20 verzichtet wird, wodurch der Zustand des Dämpfungselements 28, insbesondere dessen Verschleißzustand, keinerlei Einfluss nimmt auf die Kraftbestimmung im Zwischenelement 40.

Besonders bevorzugt ist es vorgesehen, dass das Befestigungsmittel 47 eine Schraube und/oder ein Bolzen ist, die bzw. der durch das Zwischenelement 40 und/oder das Spannelement 24 durchgreift. Dabei ist das Zwischenelement 40 derart ausgebildet, dass ein Kopf des Befestigungsmittels in einem Rücksprung 48 des Zwischenelement 40 angeordnet ist, insbesondere so angeordnet ist, dass mindestens ein Luftspalt zwischen dem Befestigungsmittel 47 und der Kupplungsplatte 20 realisiert wird, sodass sichergestellt werden kann, dass die Kupplungsplatte 20 nicht über das Befestigungsmitte 47 Kraft auf das Dämpfungselement 28 bzw. Spannelement 24 überträgt.

In dem in **Figur 2** dargestellten Ausführungsbeispiel ist das Zwischenelement 40 schalenförmig ausgeformt und ummantelt im montierten Zustand den oberen Abschnitt des Lagerbockauges 35. Zudem ummantelt das Zwischenelement 40 das Lagerbockauge 35 zumindest bereichsweise sowohl in Längsrichtung als auch in Querrichtung. Insbesondere weist das Zwischenelement 40 einen ersten Schenkelbereich 41 und einen zweiten Schenkelbereich 42 auf, die sich jeweils in Längsrichtung an einen Zentralbereich 43 des Zwischenelements 40 anschließen. Dabei sind in Längsrichtung gesehen der erste Schenkelbereich 41 und/oder der zweite Schenkelbereich 42 kürzer als eine Ausdehnung des Zentralbereichs 43. Mit einer solchen Ausführungsform wird der Kraftfluss durch das Zwischenelement 40 auf den in Längsrichtung gesehen vergleichsweise kurzen Zentralbereich 43 konzentriert.

Als Sensor ist bevorzugt ein Quader vorgesehen, der zwischen Zwischenelement 40 und der Kupplungsplatte 20 angeordnet ist, wobei an mindestens drei senkrecht zueinanderstehenden Außenflächen, beispielsweise jeweils mittels mindestens eines Dehnungsmessstreifens, die auf den Quader wirkende Kraft erfasst wird. Dabei ist es möglich, durch die an den jeweiligen Außenflächen angeordneten Sensoren sowohl eine Größe als auch eine Kraftrichtung zu erfassen, die auf den Körper wirkt und dabei elastisch verformt. Vorzugsweise ist es vorgesehen, dass mehrere quaderförmige Sensoren in das Zwischenelement 40 integriert sind. Dabei ist es vorstellbar, dass der den oder die Sensoren umfassende Körper bzw. Quader an einer Außenseite, insbesondere an einer der Kupplungsplatte 20 zugewandten Außenseite, integriert und/oder innerhalb des Zwischenelements 40 angeordnet ist.

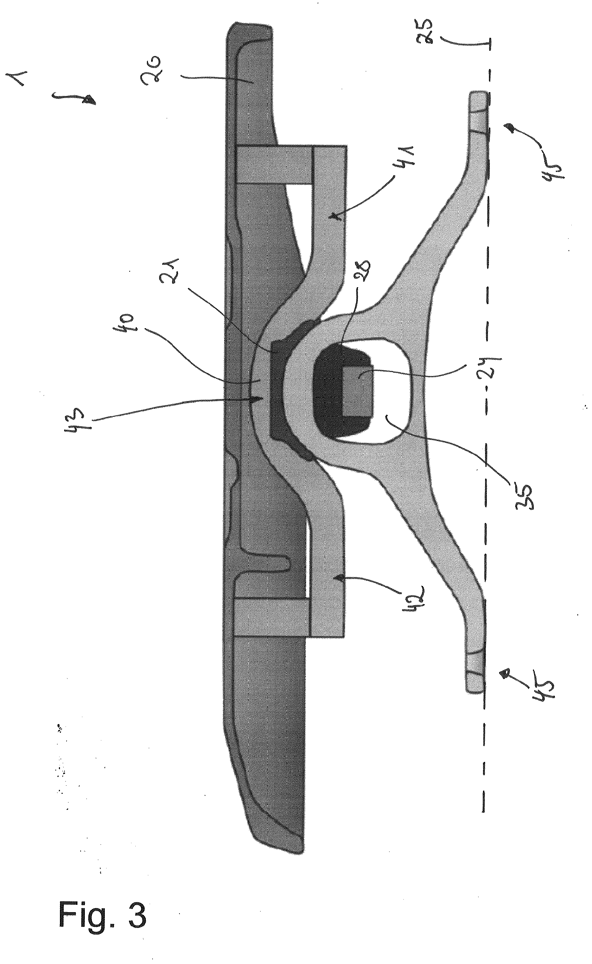

In **Figur 3** ist eine Sattelkupplung 1 gemäß einer zweiten bevorzugten Ausführungsform der vorliegenden Erfindung dargestellt. Dabei unterscheidet sich die in Figur 3 dargestellte Ausführungsform im Wesentlichen nur dahingehend von der in Figur 1 gewählten Ausführungsform, dass der erste Schenkelbereich 41 und/oder der zweite Schenkelbereich 42 im Vergleich zum Zentralbereich 43 länger ausgeformt sind. Insbesondere ist das Zwischenelement 40 schalenförmig ausgeformt und steht in Längsrichtung vergleichsweise weit mit dem ersten Schenkelbereich 41 und/oder dem zweiten Schenkelbereich 42 vom Zentralbereich 43 ab. Durch entsprechend lang gewählte erste Schenkelbereiche 41 bzw. zweite Schenkelbereiche 42 ist es möglich, vergleichsweise große Drehmomente bei der Verkippung um die Schwenkachse S, d. h. bei einer vertikalen Belastung, von der Kupplungsplatte 20 aufzunehmen, sodass eine entsprechend große Ausprägung der Verformung des Zwischenelement 41 realisiert wird, die wiederum mit dem entsprechenden Sensor 50 festgehalten und registriert werden kann. Längere Schenkelbereiche führen gerade hinsichtlich der vertikalen Betriebslast zu einer größeren Ausprägung der Verformung. Diese Verformung kann direkt im bzw. am Zwischenelement, d. h. in diesem Fall im Schenkelbereich, durch mindestens einen Sensor gemessen werden. Ferner ist es vorgesehen, dass das Zwischenelement 40 in der in Figur 3 dargestellten Ausführungsform durch den kuppelartigen Verlauf mit dem abstehenden ersten Schenkelbereichen 41 und zweiten Schenkelbereich 42 eine vergleichsweise flache Zwischenelement-Geometrie bereitstellt, die wiederum zu einer sehr kompakten Bauweise der Sattelkupplung 1 beiträgt. Dadurch lässt sich vermeiden, dass wegen des zusätzlich erforderlichen Zwischenelements 40 die Kupplungsplatte 20 signifikant in horizontaler Richtung gesehen nach oben verlagert werden müsste.

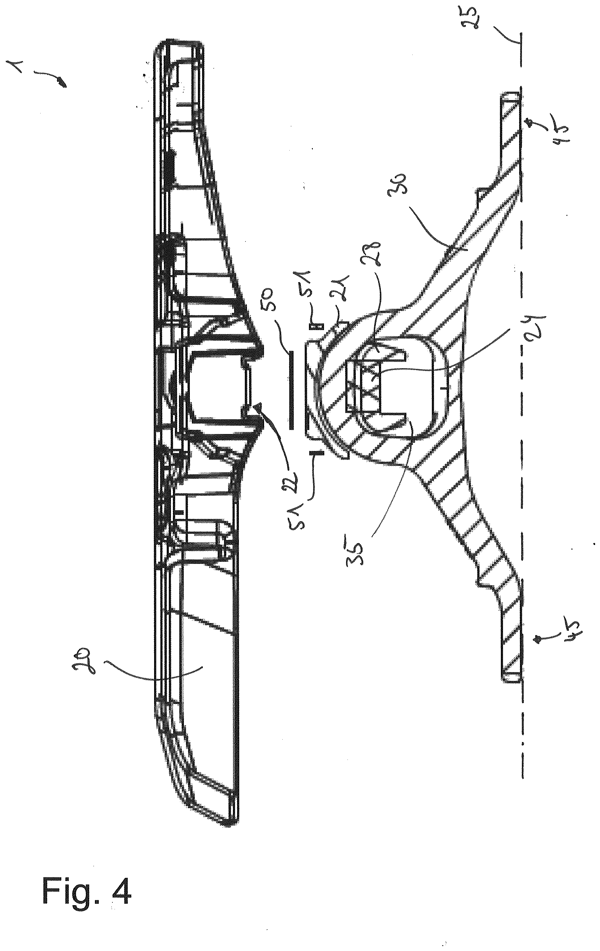

In **Figur 4** ist eine Sattelkupplung 1 gemäß einer dritten bevorzugten Ausführungsform der vorliegenden Erfindung dargestellt. Dabei unterscheidet sich die Ausführungsform der Figur 4 von den Ausführungsform der Figuren 2 und 3 dahingehend, dass der Sensor 50 zur Krafterfassung an der Außenseite des Lagereinsatzes 21 ausgeprägt ist, insbesondere zwischen einer Lagerschale und einer Tasche in der Lagerplatte. Insbesondere ist bzw. sind in dem Ausführungsbeispiel der Figur 4 ein weiterer Sensor 51 bzw. weitere Sensoren 51 an im Wesentlichen vertikal verlaufenden Außenseiten des Lagereinsatzes 21 angeordnet. Mittels einer derartigen Ausführungsform werden verschiedene Kräfte, insbesondere an verschiedenen Außenseitenflächen des Lagereinsatzes 21 ermittelt, um in einer anschließenden Analyse die erfassten Kraftflüsse durch die jeweiligen Beeinflussungen, die durch den Verschleißzustand des Spannelements 24 und/oder des Lagerteils 21 bedingt werden, mit zu berücksichtigen. Vorzugsweise werden hierzu die von dem Sensor 50 bzw. und/oder dem weiteren Sensoren 51 erfassten Größen des Kraftflusses einer Rechnereinheit bereitgestellt, die anhand der erfassten Größen des Kraftflusses, unter Berücksichtigung der Einflussfaktoren, hervorgerufen durch das Spannelement 24 und den Lagereinsatzes 21, den erfassten Kraftfluss, der zwischen Kupplungsplatte 20 und Lagereinsatzes 21 bestimmt wird, entsprechend korrigiert, wodurch eine verschleißunabhängige Bestimmung des Kraftflusses möglich ist, die es gestattet, auch langfristig die erfassten Kraftflussgrößen miteinander zu vergleichen bzw. anderweitig zu analysieren, ohne befürchten zu müssen, dass die erfassten Kraftflussgrößen wegen der veränderten Zustände im Lagereinsatz 21 bzw. Dämpfungselement 28 an Bedeutung verloren haben.

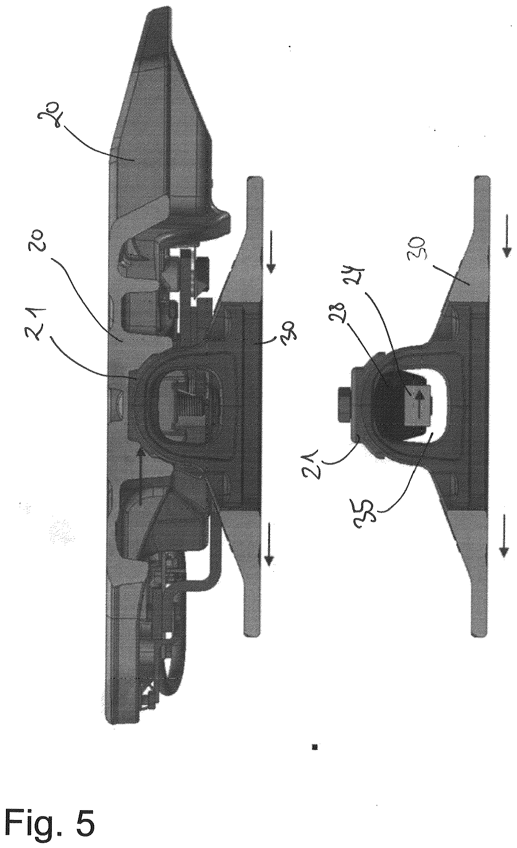

Dabei kann auf Erfahrungswerte, die im Zusammenhang mit dem jeweiligen Spannelement 24, Dämpfungselement 28 und/oder Lagereinsatzes 21 gemacht wurden zurückgegriffen werden, wobei die entsprechenden Erfahrungswerte einfließen in die Bestimmung des unverfälschten Kraftflusses mittels der Rechnereinheit. Insbesondere ist es vorstellbar, dass mittels gezielt vorgenommener Belastungen, die regelmäßig wiederholt werden, eine Messung vorgenommen wird, die ausschließlich zur Bestimmung eines Verschleißzustandes des Spannelements 24, des Dämpfungselements 28 und/oder des Lagereinsatzes 21 vorgesehen ist. Beispiele einer solchen gezielt vorgenommenen Belastungen sind in den beiden schematischen Schnittansichten aus der **Figur 5** zu entnehmen, in der gezielt durch eine Kraftvorgabe auf das Spannelement 24, den Lagerbock 30, das Lagerbockauge 24 und/oder den Lagereinsatzes 21 eine entsprechende Belastung des Lagerbocks 30 bzw. des jeweiligen Elements initiiert wird.

### Bezugszeichen:

- 1: Sattelkupplung
- 20: Kupplungsplatte
- 21: Lagereinsatz
- 22: Lagertasche
- 24: Spannelement
- 25: Montagefläche
- 28: Dämpfungselement
- 30: Lagerbock
- 35: Lagerbockauge
- 40: Zwischenelement
- 41: erster Schenkelbereich
- 42: zweiter Schenkelbereich
- 43: Zentralbereich
- 45: Anschlussbereich
- 47: Befestigungsmittel
- 48: Rücksprung
- 50: Sensor
- 51: weiterer Sensor
- 52: Entriegelungsgriff
- 53: Schlossstück
- 54: Einführbereich
- 55: Verschlusssicherung
- S: Schwenkachse
- OS: offene Seite

## Patentansprüche

1. Sattelkupplung (1) zum reversiblen Kuppeln eines Anhängers an eine Zugmaschine, umfassend:
- eine Kupplungsplatte (20) zur Aufnahme eines Zapfenelements des Anhängers,
- einen Lagerbock (30) zur schwenkbaren Lagerung der Kupplungsplatte (20) um eine Schwenkachse (S), insbesondere um eine im Wesentlichen horizontal verlaufende Schwenkachse (S) und
- einen Lagereinsatz (21), der im montierten Zustand zwischen dem Lagerbock (30) und der Kupplungsplatte (30) angeordnet ist,
wobei zwischen dem Lagereinsatz (21) und der Kupplungsplatte (30) ein Zwischenelement (40) vorgesehen ist, das mindestens einen Sensor (50) zur Krafterfassung umfasst,
wobei der mindestens eine Sensor (50) ein Kraftaufnehmer in Form eines Dehnungsmessstreifens und/oder eines Piezoelements ist,
**dadurch gekennzeichnet, dass**
das Zwischenelement (40) aus Metall, vorzugsweise aus Stahl, gefertigt ist.

2. Sattelkupplung (1) gemäß Anspruch 1, wobei das Zwischenelement (40) einstückig ausgebildet ist.

3. Sattelkupplung (1) gemäß einem der vorhergehenden Ansprüche, wobei der Lagereinsatz (21) den Lagerbock (30) teilschalenförmig umschließt.

4. Sattelkupplung (1) gemäß einem der vorhergehenden Ansprüche, wobei das Zwischenelement (40) über den Lagereinsatz (21) gleitend an einer Außenseite des Lagerbocks (30) gelagert ist, und
wobei vorzugsweise mittels eines Spannelements (24) das Zwischenelement (40) an den Lagerbock (30) festgelegt ist.

5. Sattelkupplung (1) gemäß einem der vorhergehenden Ansprüche, wobei das Zwischenelement (40) einen ersten Schenkelbereich (41), einen zweiten Schenkelbereich (42) und einen zwischen dem ersten Schenkelbereich (41) und dem zweiten Schenkelbereich (42) angeordneten Zentralbereich (43) aufweist,
wobei der Zentralbereich (43) zur Anbindung an den Lagerbock (30) und der erste Schenkelbereich (41) und/oder der zweite Schenkelbereich (42) zur Anbindung an die Kupplungsplatte (20) vorgesehen ist.

6. Sattelkupplung (1) gemäß Anspruch 5,
wobei der erste Schenkelbereich (41) und/oder der zweite Schenkelbereich (42) winklig zum Zentralbereich (43) verlaufend sind.

7. Sattelkupplung (1) gemäß einem der vorhergehenden Ansprüche, wobei die Kupplungsplatte (20) ausschließlich mittelbar über das Zwischenelement (40) an den Lagereinsatz (21) festgelegt ist.

8. Verfahren zur Bestimmung von Beladung-, Verschleiß- und/oder Belastungszuständen in einer Sattelkupplung (1) und/oder in einem Anhänger, der in einem gekoppelten Zustand an die Sattelkupplung (1) angebunden ist, mittels einer Sattelkupplung (1) gemäß einem der Ansprüche 1 bis 7, wobei der Belastung-, Verschleiß- und/oder Belastungszustand anhand der bestimmten Größe des Kraftflusses durch den Sensor bestimmt wird.

9. Computerprogramm zur Bestimmung von Beladung-, Verschleiß- und/oder Belastungszuständen in einer Sattelkupplung (1), umfassend Befehle, die bei der Ausführung des Programms durch einen Computer diesen veranlassen, das Verfahren nach Anspruch 8 auszuführen.

## Claims

1. A fifth wheel (1) for reversibly coupling a trailer to a tractor, comprising:
- a coupling plate (20) for receiving a journal element of the trailer,
- a bearing block (30) for pivotally supporting the coupling plate (20) about a pivot axis (S), in particular about a substantially horizontally extending pivot axis (S), and
- a bearing insert (21) which, in the assembled state, is arranged between the bearing block (30) and the coupling plate (30),
wherein an intermediate element (40) is provided between the bearing insert (21) and the coupling plate (30), which intermediate element (40) comprises at least one sensor (50) for force detection,
wherein the at least one sensor (50) is a force transducer in the form of a strain gauge and/or a piezo element,
**characterized in that** the intermediate element (40) is made of metal, preferably steel.

2. Fifth wheel (1) according to claim 1, wherein the intermediate element (40) is formed in one piece.

3. Fifth wheel (1) according to any one of the preceding claims, wherein the bearing insert (21) partially encloses the bearing block (30).

4. Fifth wheel (1) according to any one of the preceding claims, wherein the intermediate element (40) is slidably mounted on an outer side of the bearing block (30) via the bearing insert (21), and
wherein preferably by means of a clamping element (24) the intermediate element (40) is fixed to the bearing block (30).

5. Fifth wheel (1) according to one of the preceding claims, wherein the intermediate element (40) has a first leg region (41), a second leg region (42) and a central region (43) arranged between the first leg region (41) and the second leg region (42),
the central region (43) being provided for connection to the bearing block (30) and the first leg region (41) and/or the second leg region (42) being provided for connection to the coupling plate (20).

6. Fifth wheel coupling (1) according to claim 5,
wherein the first leg region (41) and/or the second leg region (42) extend at an angle to the central region (43).

7. Fifth wheel (1) according to any of the preceding claims, wherein the coupling plate (20) is exclusively indirectly fixed to the bearing insert (21) via the intermediate element (40).

8. A method for determining loading, wear, and/or load conditions in a fifth wheel (1) and/or in a trailer connected to the fifth wheel (1) in a coupled condition by means of a fifth wheel (1) according to any one of claims 1 to 7, wherein the load, wear, and/or load condition is determined based on the determined magnitude of the force flow through the sensor.

9. A computer program for determining loading, wear and/or load conditions in a fifth wheel (1), comprising instructions which, when the program is executed by a computer, cause the computer to execute the method of claim 8.

## Revendications

1. Sellette d'attelage (1) pour l'attelage réversible d'une remorque à un véhicule tracteur, comprenant :
- un plateau d'accouplement (20) destiné à recevoir un élément à pivot de la remorque,
- un support de palier (30) destiné au montage pivotant du plateau d'accouplement (20) autour d'un axe de pivotement (S), en particulier autour d'un axe de pivotement (S) s'étendant sensiblement horizontalement, et
- un insert de palier (21) qui, à l'état monté, est disposé entre le support de palier (30) et le plateau d'accouplement (20),
un élément intermédiaire (40) étant prévu entre l'insert de palier (21) et le plateau d'accouplement (20), lequel comprend au moins un capteur (50) de détection des forces,
ledit au moins un capteur (50) étant un capteur de force sous la forme d'une jauge de contrainte et/ou d'un élément piézoélectrique,
**caractérisée en ce que**
l'élément intermédiaire (40) est fabriqué en métal, de préférence en acier.

2. Sellette d'attelage (1) selon la revendication 1,
dans laquelle l'élément intermédiaire (40) est réalisé d'une seule pièce.

3. Sellette d'attelage (1) selon l'une des revendications précédentes,
dans laquelle l'insert de palier (21) entoure le support de palier (30) en forme de coque partielle.

4. Sellette d'attelage (1) selon l'une des revendications précédentes,
dans laquelle l'élément intermédiaire (40) est monté de manière coulissante sur une face extérieure du support de palier (30) par l'intermédiaire de l'insert de palier (21), et
de préférence, l'élément intermédiaire (40) est fixé au support de palier (30) au moyen d'un élément de serrage (24).

5. Sellette d'attelage (1) selon l'une des revendications précédentes,
dans laquelle l'élément intermédiaire (40) présente une première zone de branche (41), une deuxième zone de branche (42) et une zone centrale (43) disposée entre la première zone de branche (41) et la deuxième zone de branche (42),
la zone centrale (43) est prévue pour être reliée au support de palier (30) et la première zone de branche (41) et/ou la deuxième zone de branche (42) est prévue pour être reliée au plateau d'accouplement (20).

6. Sellette d'attelage (1) selon la revendication 5,
dans laquelle la première zone de branche (41) et/ou la deuxième zone de branche (42) s'étendent en formant un angle avec la zone centrale (43).

7. Sellette d'attelage (1) selon l'une des revendications précédentes,
dans laquelle le plateau d'accouplement (20) est fixé à l'insert de palier (21) exclusivement de manière indirecte par l'intermédiaire de l'élément intermédiaire (40).

8. Procédé de détermination des états de chargement, d'usure et/ou de sollicitation dans une sellette d'attelage (1) et/ou dans une remorque qui est reliée à la sellette d'attelage (1) dans un état accouplé, au moyen d'une sellette d'attelage (1) selon l'une des revendications 1 à 7, l'état de chargement, d'usure et/ou de sollicitation étant déterminé par le capteur à l'aide de l'ampleur déterminée du flux de force.

9. Programme informatique pour déterminer les états de charge, d'usure et/ou de sollicitation dans une sellette d'attelage (1), comprenant des instructions qui, lorsque le programme est exécuté sur un ordinateur, l'incite à mettre en oeuvre le procédé selon la revendication 8.
